# FASCICULE DE BREVET EUROPEEN

(11) **EP 3 529 093 B1**
(45) Date de publication et mention de la délivrance du brevet: **27.05.2020**
(21) Numéro de dépôt: 17794385.9
(22) Date de dépôt: 17.10.2017
(51) Int. Cl.: B60H 1/22, F24H 3/04, F24H 9/18

(54) **DISPOSITIF DE CHAUFFAGE ADDITIONNEL ELECTRIQUE**
ELEKTRISCHE HILFSHEIZVORRICHTUNG
ELECTRIC AUXILIARY HEATING DEVICE

(30) Priorité: 21.10.2016 FR 1660263
(43) Date de publication de la demande: 28.08.2019
(73) Titulaire: Valeo Systemes Thermiques, 78322 Le Mesnil Saint-Denis Cedex (FR)
(72) Inventeur: PIERRON, Frédéric, 78322 Le Mesnil Saint-Denis Cedex (FR); LEBORGNE, José, 78322 Le Mesnil Saint-Denis Cedex (FR); KARAASLAN, Serif, 78322 Le Mesnil Saint-Denis Cedex (FR)
(74) Mandataire: Tran, Chi-Hai
(86) Numéro de dépôt international: PCT/FR2017/052852
(87) Numéro de publication internationale: WO 2018/073530

(56) Documents cités:
- EP-A1- 2 607 121
- EP-A2- 2 145 782
- WO-A1-2007/129608
- FR-A1- 3 032 588

## Description

L'invention concerne un dispositif de chauffage additionnel électrique pour véhicule automobile ainsi que le procédé de fabrication dudit dispositif de chauffage. Plus particulièrement, l'invention concerne un dispositif de chauffage additionnel électrique intégré au sein d'une installation de ventilation, chauffage et/ou climatisation d'un véhicule automobile.

Les dispositifs de chauffage additionnels électriques comportent généralement un boîtier dans lequel est inséré au moins un module chauffant. Le boîtier comporte :
- une interface de connexion qui permet la liaison du ou des modules chauffants à une source d'alimentation électrique du véhicule,
- un compartiment de chauffe comprenant :
   ∘ une première extrémité ouverte par laquelle est introduit le module chauffant et contre laquelle vient s'apposer l'interface de connexion,
   ∘ une deuxième extrémité, opposée à l'interface de connexion et à la première extrémité,
   ∘ au moins deux traverses reliant la première extrémité et la deuxième extrémité, et
   ∘ au moins un montant reliant lesdites traverses.

L'interface de connexion, et le compartiment de chauffe encadrent le module chauffant. Le ou les montants maintiennent le ou les modules chauffant au sein du boîtier formé par l'interface de connexion et le compartiment de chauffe.

De tels dispositifs de chauffage additionnels sont notamment connus des demandes de brevet EP1821575, EP1486363 et du brevet EP2133225. Cependant, le montage de ces différents éléments ensemble afin de former le dispositif de chauffage additionnel, peut être complexe et coûteux.

Un dispositif de chauffage additionnel électrique selon le préambule de la revendication 1 est connu du document WO2007/129608 A1.

Un des buts de la présente invention est donc de remédier au moins partiellement aux inconvénients de l'art antérieur et de proposer un dispositif de chauffage additionnel amélioré dont le montage est simplifié.

La présente invention concerne donc un dispositif de chauffage additionnel électrique pour le chauffage d'un flux d'air traversant notamment un conduit d'une installation de ventilation, chauffage et/ou climatisation d'un véhicule automobile, le dispositif de chauffage additionnel comportant un boîtier logeant au moins un module chauffant,
ledit boîtier comportant :
∘ un compartiment de chauffe dont une première extrémité comporte une ouverture, et
∘ une interface de connexion comprenant :
   ▪ une première platine sensiblement plane, qui s'étend sensiblement parallèlement à l'ouverture de sorte à venir recouvrir ladite ouverture, et
   ▪ un fourreau qui s'étend en saillie de la première platine à l'opposé du compartiment de chauffe,
   ▪ des fentes traversant la première patine et débouchant à l'intérieur du fourreau,
      l'interface de connexion comporte sur sa face interne, tournée vers le compartiment de chauffe, au moins un plot d'insertion dont au moins une des arrêtes en vis à vis des fentes est chanfreinée.

Selon l'invention, chaque fente comporte deux plots d'insertion, un plot d'insertion étant disposé sur chacun de ses côtés latéraux.

Selon un aspect de l'invention, le au moins un plot d'insertion vient de matière avec l'interface de connexion.

Selon un autre aspect de l'invention, les fentes sur la face interne de l'interface de connexion sont chanfreinées.

D'autres avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un dispositif de chauffage additionnel,
- les figures 2a et 2b montrent des représentations schématiques d'un module chauffant selon un premier mode de réalisation,
- la figure 2c montre une représentation schématique d'un module chauffant selon un deuxième mode de réalisation,
- la figure 3 montre une représentation schématique d'une extrémité d'un module chauffant,
- la figure 4 montre une représentation schématique en perspective d'un compartiment de chauffe,
- les figures 5 et 6 montrent des représentations schématiques en perspective d'une interface de connexion,
- la figure 7 montre une représentation schématique en perspective d'une extrémité du compartiment de chauffe de la figure 4,
- la figure 8 montre une représentation schématique de la liaison entre un compartiment de chauffe et l'interface de connexion.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

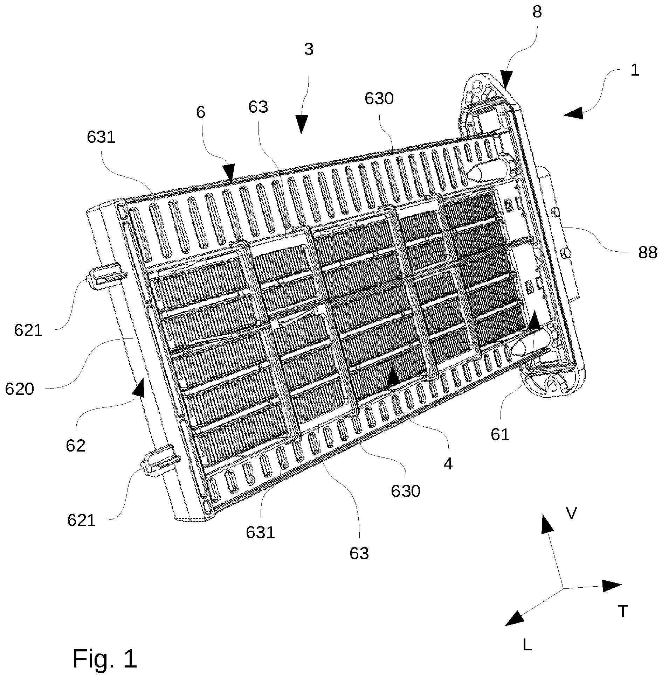

Dans la description qui va suivre, on se référera à une orientation en fonction des axes Longitudinaux, Verticaux et Transversaux tels qu'ils sont définis arbitrairement par le trièdre L,V,T représenté sur les figures 1 à 8. Le choix des appellations de ces axes n'est pas limitatif de l'orientation que peut prendre le dispositif dans son application à un véhicule automobile.

La figure 1 montre un dispositif de chauffage additionnel 1 comportant un boîtier 3 et au moins un module chauffant 4 apte à transformer un courant électrique en énergie thermique.

Le dispositif de chauffage additionnel 1 est apte à être logé dans un conduit de circulation d'air d'une installation de ventilation, chauffage et/ou climatisation (HVAC pour l'acronyme anglais *Heating*, *Ventilation and Air-Conditioning*), de manière à transformer l'énergie électrique prélevée sur le véhicule en énergie thermique et à la restituée dans l'air traversant ledit HVAC.

L'HVAC n'est pas ici représenté, mais on comprendra qu'un conduit principal de cet HVAC comporte de façon classique une ouverture réalisée dans la paroi pour l'insertion du dispositif de chauffage additionnel.

Le boîtier 3 est formé par un compartiment de chauffe 6, dans lequel au moins un module chauffant 4 peut être inséré, selon l'axe longitudinal L, et une interface de connexion 8.

Le boîtier 3 est de préférence réalisé en un matériau plastique, par exemple du polypropylène ou du polyamide, chargé en fibres de verre. Le compartiment de chauffe 6 et l'interface de connexion 8 peuvent être réalisés dans un même matériau ou bien dans des matériaux différents. Par exemple, l'interface de connexion 8 peut être réalisée dans un matériau moins résistant à la chaleur que le compartiment de chauffe 6. En effet, le compartiment de chauffe 6 peut être amené à subir des températures de l'ordre de 150 à 180 °C du fait des modules chauffante 4 alors que l'interface de connexion 8 peut quant à elle être amenée à subir des températures de l'ordre de 85 à 105 °C.

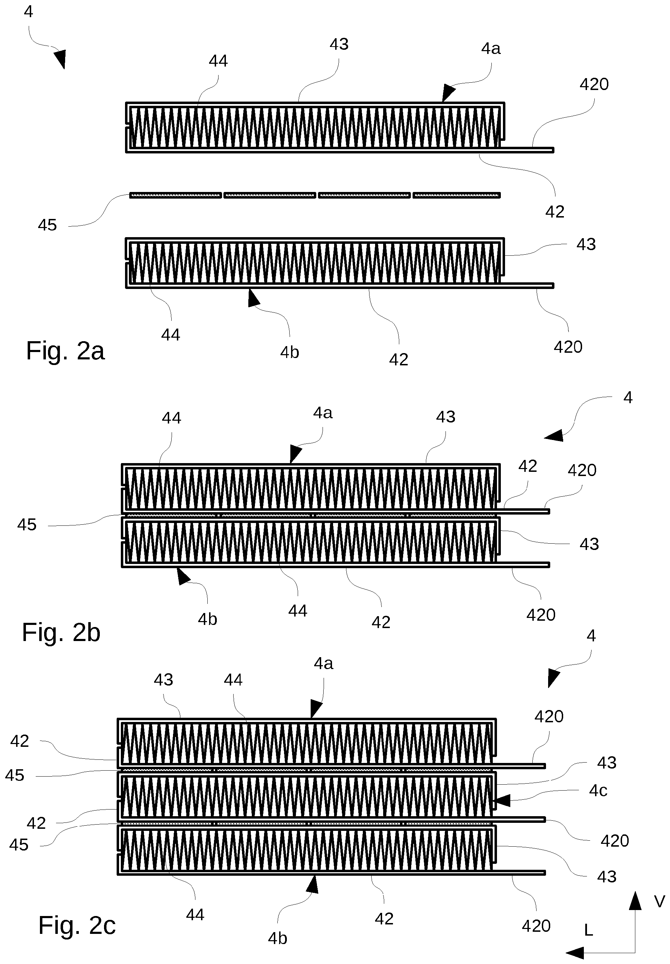

Les figures 2a à 2c montrent plus en détail le module chauffant 4. Le module chauffant 4 comporte :
- au moins deux ensembles conducteurs 4a, 4b électriques et thermiques, formés :
   ∘ d'une électrode conductrice 42 prolongée longitudinalement par une extrémité libre d'électrode 420, ladite extrémité libre d'électrode 420 étant apte à être reliée à la source d'alimentation électrique du véhicule au niveau de l'interface de connexion 8,
   ∘ une plaque de maintien 43 pouvant être réalisée dans un matériau métallique comme l'aluminium par exemple, et
   ∘ un intercalaire 44 pris en sandwich et maintenu entre l'électrode conductrice 42 et la plaque de maintien 43, l'intercalaire 44 peut notamment être une bande métallique repliée en accordéon et placée entre l'électrode conductrice 42 et la plaque de maintien 43 de sorte qu'un flux d'air puisse traverser l'intercalaire 44,
- au moins une céramique 45 à effet de coefficient de température positif (CTP), ladite au moins une céramique 45 étant prise en sandwich entre deux ensembles conducteurs 4a, 4b.

Dans un premier mode de réalisation d'un module chauffant 4, illustré aux figures 2a et 2b, ledit module chauffant 4 comporte deux ensembles conducteurs 4a et 4b superposés et entre lesquels sont placées des céramiques 45 CTP. Dans le cas illustré aux figures 2a et 2b, il y a quatre céramiques 45 CTP disposées côte à côte, mais ce nombre peut varier notamment en fonction de la longueur du module chauffant 4. Plus un module chauffant 4 sera long, plus le nombre de céramiques 45 CTP nécessaire sera grand, et inversement, plus un module chauffant 4 sera court, plus le nombre de céramiques 45 CTP nécessaire sera petit.

Dans ce premier mode de réalisation du module chauffant 4, ledit module chauffant 4 comporte alors deux extrémités libres d'électrodes 420, une première extrémité libre d'électrode 420 étant apte à être reliée à une borne positive d'alimentation électrique et une seconde extrémité libre d'électrode 420 étant apte à être reliée à une borne négative d'alimentation électrique.

Dans un deuxième mode de réalisation du module chauffant 4 illustré à la figure 2c, le module chauffant 4 comporte trois ensembles conducteurs 4a, 4b et 4c superposés et entre lesquels sont placées des céramiques 45 CTP. Dans le cas illustré à la figure 2c, il y a quatre céramiques 45 CTP entre deux ensembles, mais ce nombre peut varier notamment en fonction de la longueur du module chauffant 2.

Dans ce deuxième mode de réalisation du module chauffant 4, le module chauffant 4 comporte alors trois extrémités libres d'électrodes 420, deux extrémités libres d'électrodes 420 étant aptes à être reliées à une borne positive d'alimentation électrique, notamment les extrémités libres d'électrodes 420 des ensembles conducteurs 4a et 4b placés en périphérie de la superposition des ensembles conducteurs 4a, 4b et 4c, et une extrémité libre d'électrode 420 étant apte à être reliée à une borne négative d'alimentation électrique, notamment l'extrémité libre d'électrode 420 de l'ensemble conducteur 4c placé au centre de la superposition des ensembles conducteurs 4a, 4b et 4c.

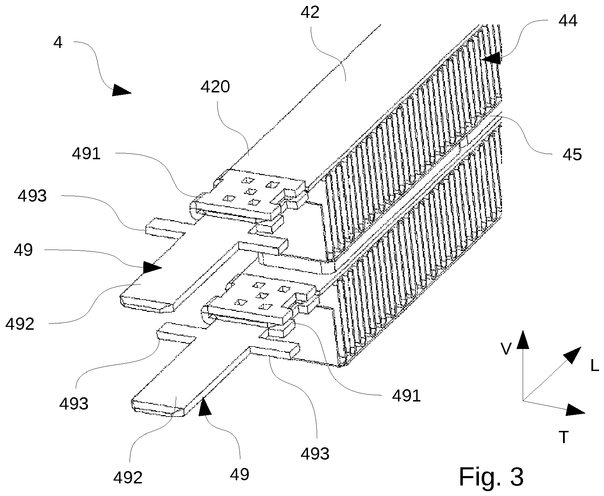

Comme illustré à la figure 3, le au moins un module chauffant 4 comporte un terminal de raccordement 49 au faisceau électrique du véhicule. Ce terminal de raccordement 49 est disposé sur chacune des extrémités libres d'électrodes 420 prolongeant les modules chauffants 4. Le terminal de raccordement 49 présente une partie de fixation 491 formant un manchon de largeur légèrement supérieure à la largeur de l'électrode conductrice 42 pour être serti sur son extrémité libre d'électrode 420. Le terminal de raccordement 49 présente également une partie de raccordement formée par une languette 492 qui s'étend dans le prolongement de l'extrémité libre d'électrode 420. Cette languette 492 présente ici une section sensiblement rectangulaire.

Ces terminaux de raccordement 49 servent d'interface entre les extrémités libres d'électrodes 420 et des connecteurs électriques non représentés. En effet, selon le type de module chauffant 4, les extrémités libres d'électrodes 420 peuvent être très fines et ne pas convenir pour recevoir directement des connecteurs électriques.

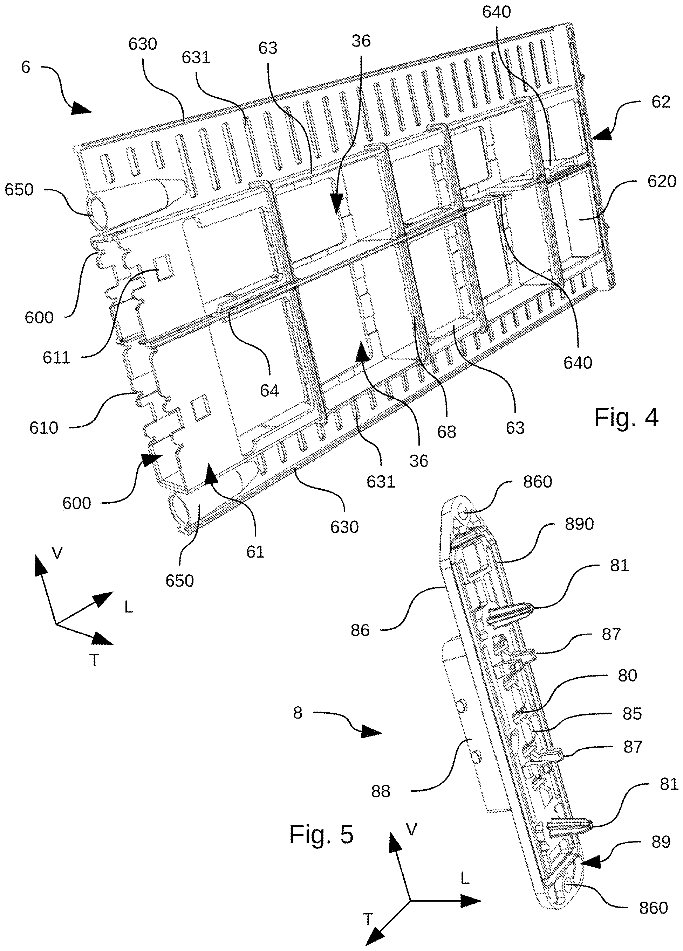

Le compartiment de chauffe 6 est illustré à la figure 4. Le compartiment de chauffe 6 comporte notamment :
- une première extrémité 61 comportant une ouverture 600 s'étendant selon le plan formé par l'axe vertical V et l'axe longitudinal L. Le au moins un module chauffant 4 est inséré dans le boîtier 3 par l'ouverture 600. La première extrémité 61 porte également l'interface de connexion 8,
- une deuxième extrémité 62, notamment de fixation mécanique, qui est disposée à l'autre extrémité du compartiment de chauffe 6 opposée à la première extrémité 61. Ladite deuxième extrémité 62 est notamment apte à coopérer avec une paroi du conduit de l'installation de ventilation, chauffage et/ou climatisation, et
- deux parois latérales 63, parallèles entre elles et qui définissent les côtés latéraux du compartiment de chauffe 6. Ces parois latérales 63 s'étendent selon l'axe longitudinal L et jouent le rôle de traverses reliant les première 61 et deuxième 62 extrémités.

Le compartiment de chauffe 6 peut être notamment en forme de parallélépipède rectangle dont les deux faces principales sont ajourées pour permettre la diffusion dans le conduit de la chaleur dégagée par les modules chauffants 4 logés à l'intérieur du compartiment de chauffe 6.

Le compartiment de chauffe 6 peut également comporter des déflecteurs 630 sur les parois latérales 63. Ces déflecteurs 630, permettent d'augmenter et de réguler les pertes de charges au sein du conduit du HVAC, de sorte à rediriger le flux d'air afin qu'il traverse le ou les modules chauffants 4. Les déflecteurs 630 peuvent également comporter des ouvertures 631 dont le nombre et la taille sont variables selon les besoins de perte de charge.

Des montants 68, disposés à intervalles réguliers ou non, les uns des autres, s'étendent selon l'axe vertical V sur toute la hauteur des faces principales du boîtier 3 afin de rigidifier le compartiment de chauffe 6, sans pénaliser le dégagement de chaleur. Les montants 68 s'étendent sensiblement perpendiculairement aux parois latérales 63 depuis un bord transversal respectif pour relier les parois latérales 63 entre elles.

Comme illustré à la figure 4, le compartiment de chauffe 6 peut également comporter une paroi intermédiaire 64, disposée entre les parois latérales 63 parallèlement à ces dernières. Il est ainsi possible de définir deux logements 36 distincts dans le compartiment de chauffe 6. Chaque logement 36 peut comporter un module chauffant 4.

Le dispositif de chauffage additionnel 1 peut comprendre plus particulièrement un premier module chauffant 4 selon le premier mode de réalisation décrit ci-dessus et un second module chauffant 4 selon le deuxième mode de réalisation décrit ci-dessus. Ces deux modules chauffants 4 sont séparés l'un de l'autre par la paroi intermédiaire 64. Il est néanmoins tout à fait concevable d'imaginer, sans sortir du cadre de l'invention, un dispositif de chauffage additionnel 1 comportant moins ou plus de modules chauffants 4, selon n'importe quel mode de réalisation des modules chauffants 4.

La paroi intermédiaire 64 peut comporter en outre au moins une lame à déformation élastique 640, réalisée notamment par un poinçonnage partiel d'une portion de la paroi intermédiaire 64, de sorte qu'elle est articulée à la paroi intermédiaire 64 à une première extrémité longitudinale. Cette lame à déformation élastique présente à l'opposé une extrémité libre qui s'étend, dans une position de repos de la lame à déformation élastique 640, en saillie du plan défini par la paroi intermédiaire 64, dans l'un ou l'autre des logements 36. De préférence, la paroi intermédiaire 64 comporte au moins deux lames à déformation élastique 640, chacune ayant sont extrémité libre faisant saillie dans un logement 36 distinct. L'extrémité libre de la lame à déformation élastique 640 pointe de préférence à l'opposé de l'ouverture 600 de la première extrémité 61 afin de ne pas gêner l'insertion du module chauffant 4. La lame à déformation élastique 640 joue un rôle d'amortisseur et exerce une poussée selon l'axe vertical V sur le module chauffant 4 pour le maintenir en place et le stabiliser.

La première extrémité 61 est destinée à recevoir une interface de connexion 8 pour le raccordement du dispositif 1 à un réseau électrique du véhicule et l'alimentation des modules chauffants 4, l'interface de connexion 8 recouvrant l'ouverture 600. Cette interface de connexion 8 est illustrée à la figure 5.

L'interface de connexion 8 a une fonction de connexion électrique pour permettre le raccordement des modules chauffants 4 à une source d'énergie électrique et une fonction mécanique pour fermer de façon étanche l'ouverture du conduit de l'HVAC par laquelle le dispositif de chauffage additionnel 1 est inséré.

L'interface de connexion 8 comporte :
- une première platine 86 sensiblement plane, qui s'étend sensiblement parallèlement à l'ouverture 600 de sorte à venir recouvrir l'ouverture 600, soit dans le plan formé par l'axe vertical V et l'axe transversal T, et
- un fourreau 88 qui s'étend en saillie de la première platine 86, selon l'axe longitudinal L, à l'opposé du compartiment de chauffe 6.

Des moyens de fixation mécanique associés à l'interface de connexion 8 peuvent être portés par la première platine 86 qui présente des trous de fixation 860 permettant la fixation mécanique du dispositif de chauffage additionnel 1 au conduit de l'HVAC, par exemple par vissage.

La première platine 86 peut comporter sur sa face interne 89, tournée vers le compartiment de chauffe 6, une rainure périphérique 890 dans laquelle un joint peut être positionné ou dans laquelle peut venir s'insérer un élément de l'HVAC afin de former une chicane. Cela permet d'assurer l'étanchéité à l'air entre l'intérieur de l'emplacement où s'étend le compartiment de chauffe 6 et l'extérieur de cet emplacement où s'étend la première platine 86 et notamment le fourreau 88.

L'interface de connexion 8 présente des fentes 80 traversant, selon l'axe longitudinal L, la première patine 86. Les fentes 80 débouchent à l'intérieur du fourreau 88. Les fentes 80 présentent une section définie pour recevoir et guider à travers l'interface de connexion 8 les terminaux de raccordement 49, afin qu'ils puissent s'étendre dans le fourreau 88 en saillie de la première platine 86.

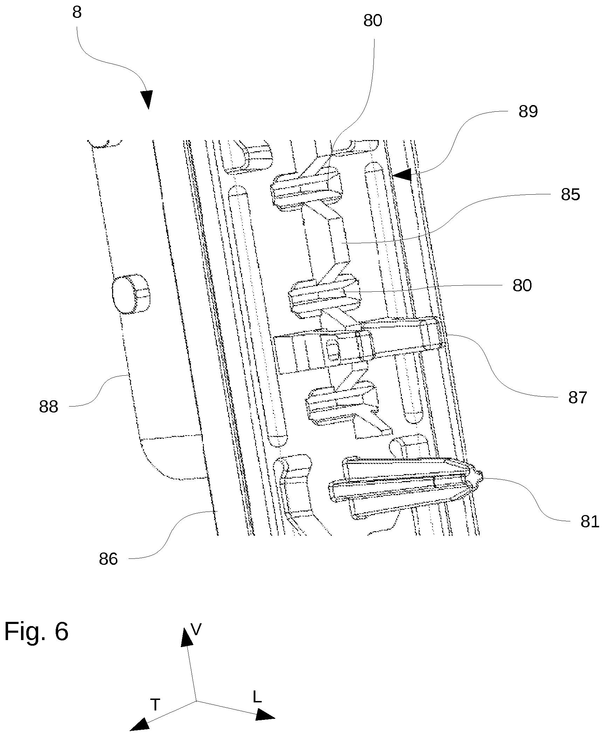

Afin de faciliter l'insertion des terminaux de raccordement 49 dans les fentes 80, l'interface de connexion 8 peut comporter sur sa face interne 89, tournée vers le compartiment de chauffe 6, au moins un plot d'insertion 85 dont au moins une des arrêtes en vis à vis des fentes 80 est chanfreinée, comme le montre la figure 5 et plus en détail la figure 6. Selon l'invention chaque fente 80 comporte deux plots d'insertion 85, un plot d'insertion 85 étant disposé sur chacun de ses côtés latéraux. De préférence, les plots d'insertion 85 viennent de matière avec l'interface de connexion 8.

Toujours afin de faciliter l'insertion des terminaux de raccordement 49, les fentes 80 sur la face interne 86 de l'interface de connexion 8 peuvent être chanfreinées.

Le ou les terminaux de raccordement 49 des modules chauffants comportent au moins une ailette 493 faisant saillie sur un côté latéral du terminal de raccordement 49 (visible sur la figure 3). Cette au moins une ailette 493 est destinée à venir s'engager dans une encoche 610 complémentaire de réception réalisée au niveau de la première extrémité 61 du compartiment de chauffe 6 (visible sur la figure 4). De préférence, un terminal de raccordement 49 comporte deux ailettes 493 s'étendant de part et d'autre dudit terminal de raccordement 49, sur ses côtés latéraux et qui viennent s'engager dans deux encoches 610 réalisées de part et d'autre de l'ouverture 600 de la première extrémité 61 du compartiment de chauffe 6.

Avantageusement, la au moins une ailette 493 vient de matière avec le terminal de raccordement 49 et peut avoir une forme de parallélépipède rectangle.

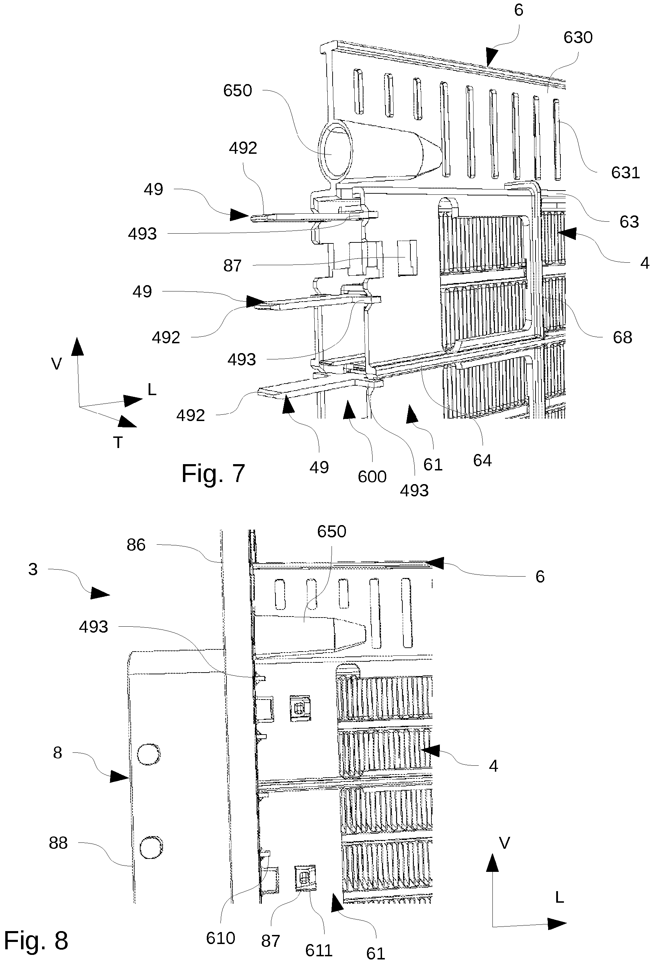

La au moins une encoche 610 complémentaire a de préférence une profondeur correspondante à la largeur de l'ailette 493. Ainsi, le bord de ladite ailette 493 peut être aligné avec le bord périphérique externe de la première extrémité 61 du compartiment de chauffe 6 comme illustré à la figure 7.

Afin de faciliter l'insertion de la au moins une ailette 493 dans les encoches 610 complémentaires, les ouvertures de ces dernières peuvent comporter des chanfreins.

Comme le montre la figure 8, l'interface de connexion 8 lorsqu'elle est fixée à la première extrémité 61, enferme l'au moins une ailette 493 entre le fond de l'encoche 610 complémentaire et ladite interface de connexion 8, plus précieusement sa face interne 89.

Ces ailettes 493 permettent un maintien des extrémités libres 420 d'électrode des modules chauffants 4 au sein du boîtier 3. Les encoches 610 limitent les mouvements des modules chauffants 4 selon l'axe vertical V mais également selon l'axe longitudinal L lorsque l'interface de connexion 8 est fixée.

Comme le montrent les figures 5 et 6, l'interface de connexion 8 peut comporter sur sa face interne 89, tournée vers le compartiment de chauffe 6, au moins un doigt de guidage 81 faisant saillie en direction de la première extrémité 61 du compartiment de chauffe 6. Comme le montre plus en détail la figure 6, le au moins un doigt de guidage 81 peut avoir une forme conique ou avoir son extrémité en forme de cône et dont le sommet pointe vers le compartiment de chauffe 6. Le au moins un doigt de guidage 81 peut notamment être cruciforme ou avoir une forme inscrite dans un cône de référence afin de limiter la quantité de matière. De préférence et pour plus de facilité de fabrication, le au moins un doigt de guidage 81 vient de matière avec l'interface de connexion 8.

La première extrémité 61 du compartiment de chauffe 6 comporte quant à elle au moins une cavité de guidage 650 (visible notamment aux figures 4, 7 et 8) et apte à recevoir un doigt de guidage 81.

L'au moins un doigt de guidage 81 et sa cavité de guidage 650 permettent notamment un alignement et un guidage de l'interface de connexion 8 lors de sa mise en place contre la première extrémité 61 du compartiment de chauffe 6 afin de former le boîtier 3.

L'interface de connexion 8 peut comporter deux doigts de guidage 81 et la première extrémité 61 du compartiment de chauffe 6 peut comporter deux cavités de guidage 650. De préférence, ces deux cavités de guidage 650 sont disposées de part et d'autre de l'ouverture 600 au niveau des parois latérales 63. Les deux doigts de guidage 81 sont quant à eux disposés de part et d'autre de l'ensemble formé par les fentes 80.

Afin de fixer l'interface de connexion 8 au compartiment de chauffe 6, la face interne 86 de l'interface de connexion 8 peut comporter des pattes 87 crochues dont les extrémités viennent s'emboîter dans des orifices 611 de la première extrémité 61 de sorte à permettre une fixation par emboîtage élastique et/ou mécanique.

La deuxième extrémité 62 du compartiment de chauffe 6 comporte une deuxième platine 620 (visible sur la figure 1) qui s'étend dans le plan formé par l'axe vertical V et l'axe transversal T, sensiblement perpendiculairement aux parois latérales 63, du compartiment de chauffe 6. Cette deuxième platine 620 est sensiblement parallèle à la première platine 86 de l'interface de connexion 8.

La deuxième platine 620 peut comporter des ergots 621 faisant saille à l'opposé du compartiment de chauffe 6 et servant à positionner le dispositif de chauffage additionnel 1 au sein du conduit du HVAC.

Ainsi, on voit bien que du fait de sa structure et notamment de la présence des ailettes 493 sur les terminaux électriques de raccordement 49 associées avec les encoches 610 des premières extrémités 61 du compartiment de chauffe 6, des doigts de guidage 81 associés avec les cavités de guidage 650 ainsi que des plots d'insertion 85, le montage du dispositif de chauffage additionnel 1 est facilité.

## Revendications

1. Dispositif de chauffage additionnel (1) électrique pour le chauffage d'un flux d'air traversant notamment un conduit d'une installation de ventilation, chauffage et/ou climatisation d'un véhicule automobile, le dispositif de chauffage additionnel (1) comportant un boîtier (3) logeant au moins un module chauffant (4),
ledit boîtier (3) comportant :
∘ un compartiment de chauffe (6) dont une première extrémité (61) comporte une ouverture (600), et
∘ une interface de connexion (8) comprenant :
▪ une première platine (86) sensiblement plane, qui s'étend sensiblement parallèlement à l'ouverture (600) de sorte à venir recouvrir ladite ouverture (600), et
∘ un fourreau (88) qui s'étend en saillie de la première platine (86) à l'opposé du compartiment de chauffe (6),
▪ des fentes (80) traversant la première patine (86) et débouchant à l'intérieur du fourreau (88),
l'interface de connexion (8) comportant sur sa face interne (89), tournée vers le compartiment de chauffe (6), au moins un plot d'insertion (85) dont au moins une des arrêtes en vis à vis des fentes (80) est chanfreinée, **caractérisé en ce que** chaque fente (80) comporte deux plots d'insertion (85), un plot d'insertion (85) étant disposé sur chacun de ses côtés latéraux.

2. Dispositif de chauffage additionnel (1) électrique selon la revendication 1, **caractérisé en ce que** le au moins un plot d'insertion (85) vient de matière avec l'interface de connexion (8).

3. Dispositif de chauffage additionnel (1) électrique selon l'une des revendications précédentes, **caractérisé en ce que** les fentes (80) sur la face interne (89) de l'interface de connexion (8) sont chanfreinées.

## Patentansprüche

1. Elektrische Zusatzheizvorrichtung (1) zum Erwärmen eines einen Kanal einer Belüftungs-, Heizungs- und/oder Klimasteuerungsanlage eines Kraftfahrzeugs durchquerenden Luftstroms, wobei die Zusatzheizvorrichtung (1) ein Gehäuse (3) aufweist, in dem mindestens ein Heizmodul (4) untergebracht ist, wobei das Gehäuse (3) aufweist:
o ein Heizabteil (6), von dem ein erstes Ende (61) eine Öffnung (600) aufweist, und
o eine Verbindungsschnittstelle (8), die enthält:
• eine im Wesentlichen ebene erste Platte (86), die sich im Wesentlichen parallel zur Öffnung (600) erstreckt, um die Öffnung (600) zu bedecken, und
• eine Hülle (88), die sich von der ersten Platte (86) vorstehend entgegengesetzt zum Heizabteil (6) erstreckt,
• Schlitze (80), die die erste Platte (86) durchqueren und im Inneren der Hülle (88) münden,
wobei die Verbindungsschnittstelle (8) an ihrer Innenseite (89) zum Heizabteil (6) weisend mindestens einen Einführblock (85) aufweist, von dem mindestens eine der Kanten gegenüber den Schlitzen (80) abgeschrägt ist, **dadurch gekennzeichnet, dass** jeder Schlitz (80) zwei Einführblöcke (85) aufweist, wobei ein Einführblock (85) auf jeder seiner Seitenflächen angeordnet ist.

2. Elektrische Zusatzheizvorrichtung (1) nach Anspruch 1, **dadurch gekennzeichnet, dass** der mindestens eine Einführblock (85) aus einem Stück mit der Verbindungsschnittstelle (8) besteht.

3. Elektrische Zusatzheizvorrichtung (1) nach einem der vorhergehenden Ansprüche, **dadurch gekennzeichnet, dass** die Schlitze (80) an der Innenseite (89) der Verbindungsschnittstelle (8) abgeschrägt sind.

## Claims

1. Electric auxiliary heating device (1) for heating an airflow particularly passing through a conduit of a ventilation, heating and/or air conditioning installation of a motor vehicle, the auxiliary heating device (1) comprising a casing (3) housing at least one heating module (4),
said casing (3) comprising:
_{∘} a heating compartment (6), a first end (61) of which comprises an opening (600); and
∘ a connection interface (8) comprising:
▪ a first substantially flat plate (86) that extends substantially parallel to the opening (600) so as to cover said opening (600); and
▪ a sheath (88) that extends by projecting from the first plate (86) opposite the heating compartment (6);
▪ slots (80) passing through the first plate (86) and emerging inside the sheath (88),
the connection interface (8) comprising, on its internal face (89), rotated toward the heating compartment (6), at least one insertion stud (85), at least one of the edges of which facing the slots (80) is chamfered, **characterized in that** each slot (80) comprises two insertion studs (85), an insertion stud (85) being disposed on each of its lateral sides.

2. Electric auxiliary heating device (1) according to Claim 1, **characterized in that** the at least one insertion stud (85) is integrally formed with the connection interface (8).

3. Electric auxiliary heating device (1) according to either of the preceding claims, **characterized in that** the slots (80) on the internal face (89) of the connection interface (8) are chamfered.
